(19) Europäisches Patentamt

European Patent Office

Office européen des brevets

(11) **EP 0 884 566 A1**

(12) **EUROPÄISCHE PATENTANMELDUNG**

(43) Veröffentlichungstag:
**16.12.1998 Patentblatt 1998/51**

(51) Int. Cl.⁶: **G01F 1/44**

(21) Anmeldenummer: 97109356.2

(22) Anmeldetag: **10.06.1997**

(84) Benannte Vertragsstaaten:
**CH DE DK FI LI SE**
Benannte Erstreckungsstaaten:
**AL LT LV RO SI**

(71) Anmelder:
**Electrowatt Technology Innovation AG**
**6301 Zug (CH)**

(72) Erfinder: **Huber, Wolfgang**
**6330 Cham (CH)**

(54) **Durchflussmesser**

(57)    Ein klassischer Durchflussmesser (1) weist einen Einlaufzylinder (2), einen Einlaufkonus (3) oder eine Venturidüse, ein Halsteil (4) und einen Diffusor (5) auf, die in Strömungsrichtung (6) nacheinander angeordnet sind. Zur Verkleinerung des Einflusses von Einbaustörungen ist vor dem Einlaufzylinder (2) ein Vorkonfusor (10) angeordnet. Der Vorkonfusor (10) ist als Konus oder als Düse oder als Langradiusdüse ausgebildet. Optimale Verhältnisse ergeben sich, wenn der Durchmesser $D_{EZ}$ des Einlaufzylinders (2) um etwa einen Faktor $\sqrt{2}$ kleiner und wenn der Durchmesser $D_{HT}$ des Halsteils (4) um etwa einen Faktor 2 kleiner als der Eingangsdurchmesser $D_E$ des Vorkonfusors (10) ist.

Fig.2

EP 0 884 566 A1

## Beschreibung

Die Erfindung betrifft einen Durchflussmesser der im Oberbegriff des Anspruchs 1 genannten Art.

Durchflussmesser werden zur Messung des durch ein Rohrsystem fliessenden Volumens eines Mediums verwendet. Die deutsche Norm DIN 1952 beschreibt die Durchflussmessung mit Blenden, Düsen und Venturirohren in voll durchströmten Rohren mit kreisförmigem Querschnitt. Zur Einhaltung einer vorgegebenen Messgenauigkeit müssen vor und nach dem Durchflussmesser sogenannte störungsfreie, gerade, als Beruhigungsstrecken dienende Rohrstrecken angeordnet werden. Die vorgeschriebene Mindestlänge dieser Rohrstrecken bemisst sich nach der Art der in einem konkreten Rohrleitungssystem vorhandenen Einbaustötungen und beträgt bei klassischen Venturirohren im schlechtesten Fall das 80-fache deren Eingangsdurchmessers.

Der Erfindung liegt die Aufgabe zugrunde, einen Durchflussmesser vorzuschlagen, bei dem eine hohe Messgenauigkeit bereits mit relativ kurzen Beruhigungsstrecken erzielbar ist.

Die Erfindung besteht in den im Anspruch 1 angegebenen Merkmalen. Vorteilhafte Ausgestaltungen ergeben sich aus den abhängigen Ansprüchen.

Nachfolgend wird ein Ausführungsbeispiel der Erfindung anhand der Zeichnung näher erläutert. Die benutzten Begriffe sind in der Norm DIN 1952 und/oder im Buch "Technische Strömungslehre von W. Bohl (ISBN 3-8023-0036-X) ausführlich definiert.
Es zeigen:

Fig. 1     einen Durchflussmesser gemäss dem Stand der Technik, und

Fig. 2     einen erfindungsgemässen Durchflussmesser.

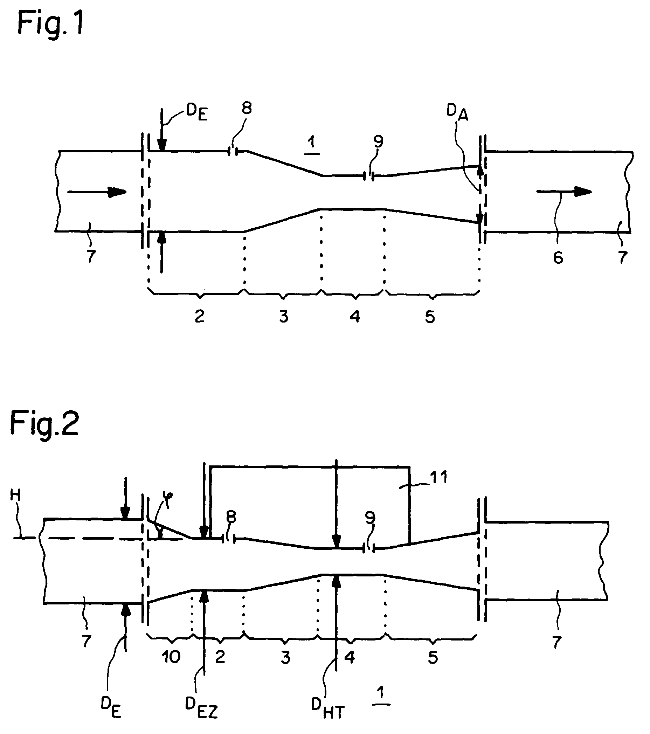

Die Fig. 1 zeigt im Längsschnitt einen als klassisches Venturirohr ausgebildeten Durchflussmesser 1 mit einem Einlaufzylinder 2, einem Einlaufkonus 3, einem Halsteil 4 und einem Diffusor 5, die in Strömungsrichtung 6 nacheinander angeordnet sind. Der Durchflussmesser 1 ist in eine Leitung 7 eingebaut und misst den Durchsatz des in der Leitung 7 fliessenden Mediums, beispielsweise von Wasser. Der Eingangsdurchmesser $D_E$ des Durchflussmessers 1, das ist hier der Durchmesser des Einlaufzylinders 2, ist gleich dem Innendurchmesser der Leitung 7. Der Austrittsdurchmesser $D_A$ des Diffusors 5 kann kleiner oder gleich dem Durchmesser der Leitung 7 sein. Im Einlaufzylinder 2 und im Halsteil 4 sind Bohrungen 8 bzw. 9 angebracht, die je nach Messverfahren der Druckentnahme oder der Strömungsabzweigung und Strömungsrückführung dienen. Solche Durchflussmesser 1 sind aus der deutschen Norm DIN 1952 bekannt. Die eigentliche Durchflussmessung kann mittels verschiedener Messverfahren erfolgen, z.B. über eine Differerzdruckmessung oder durch Messung des durch einen Bypass fliessenden Volumens, usw.

Die Fig. 2 zeigt einen erfindungsgemässen Durchflussmesser 1, bei dem vor dem Einlaufzylinder 2 ein Vorkonfusor 10 angeordnet ist. Der Vorkonfusor 10 weist vorteilhaft einen konischen Verlauf auf. Er kann aber auch als Düse, insbesondere als Langradiusdüse, ausgebildet sein. Der Eingangsdurchmesser $D_E$ des Vorkonfusors ist gleich dem Innendurchmesser der Leitung 7. Die Bohrungen 8 bzw. 9 zur Druckentnahme bzw. der Strömungsabzweigung und Strömungsrückführung sind wiederum im Einlaufzylinder 2 und im Halsteil 4 angebracht. Bei dem in der Fig. 2 dargestellten Durchflussmesser 1 fliesst ein geringer Teil der Strömung durch die Bohrung 8 hinaus, durch einen Ultraschallzähler 11 und durch die Bohrung 9 zurück während der grösste Teil der Strömung durch das Venturirohr fliesst.

Dem Nachteil, dass der Vorkonfusor 10 eine Reduzierung des sich zwischen den Bohrungen 8 und 9 einstellenden Wirkdruckes bewirkt, steht der Vorteil gegenüber, dass sich nun ein Teil der Beschleunigung des Mediums im Vorkonfusor 10 vollzieht, was eine gleichrichtende und ausgleichende Wirkung auf das Strömungsprofil hat. Der Vorkonfusor 10 bewirkt somit eine Verminderung des Einflusses von Störstellen, so dass die Länge der zum Erreichen einer vorbestimmten Messgenauigkeit vorzuschreibenden Beruhigungsstrecke erheblich verkürzt werden kann. Optimale Verhältnisse ergeben sich, wenn der Vorkonfusor 10 den Eingangsdurchmesser $D_E$ um einen Faktor $\sqrt{2}$ reduziert, so dass der Durchmesser $D_{EZ}$ des Einlaufzylinders 2 etwa

$$D_{EZ} = \frac{D_E}{\sqrt{2}}$$

beträgt, und wenn der Einlaufkonus 3 den Durchmesser $D_{EZ}$ des Einlaufzylinders 2 ebenfalls um etwa einen Faktor $\sqrt{2}$ reduziert, so dass der Durchmesser $D_{HT}$ des Halsteils annähernd halb so gross wie der Eingangsdurchmesser $D_E$ ist:

$$D_{HT} = \frac{D_E}{2}.$$

Bei konischer Ausbildung des Vorkonfusors 10, wie er in der Fig. 2 dargestellt ist, ist der Winkel $\varphi$, den seine Kegelfläche mit der Horizontalen H einschliesst, sorgfältig zu bestimmen. Ist der Winkel $\varphi$ klein, dann wird der Vorkonfusor 10 unnötig lang. Ist der Winkel $\varphi$ zu gross, dann entstehen im Gebiet des kantigen Übergangs zum Einlaufzylinder 2 sogenannte Totwasser- oder Ablösungsgebiete, die eine unruhige Strömung im Einlaufzylinder 2 bewirken, so dass die Wirkung des Vorkonfusors 10 verschlechtert oder gänzlich zunichte gemacht oder sogar negativ ist. Solche Ablösungsgebiete sind zudem unerwünscht, da sie besonders anfällig für Ablagerungen sind. In der Praxis hat sich der Wert φ=21° als geeignet erwiesen. Zur weiteren Verbesserung der Strömungseigenschaften ist der Übergang vom Vorkonfusor 10 auf den Einlaufzylinder 2 vorzugsweise gerundet, d.h. stromlinienförmig, ausgeführt.

Die in Strömungsrichtung 6 gemessene Länge der einzelnen Abschnitte Eingangskonus 3, Halsteil 4 und Diffusor 5 ist gegenüber dem klassischen Venturirohr annähernd unverändert. Zur Optimierung des Durchflussmessers 1 können die Längen sämtlicher Abschnitte, also inklusive diejenigen des Vorkonfusors 10 und des Eingangszylinders 2, variiert werden. Der Austrittsdurchmesser $D_A$ des Diffusors 5 kann ohne weiteres bis zu 35% kleiner als der Durchmesser der Leitung 7 sein.

Mit einem erfindungsgemässen Durchflussmesser 1 genügen Beruhigungsstrecken, die nur etwa fünf mal so lang wie der Eingangsdurchmesser $D_E$ sind, um selbst den Einfluss von hochgradigen Einbaustörungen auf das von beispielsweise der Norm DIN 1952 vorgeschriebene Mass zu senken.

**Patentansprüche**

1. Durchflussmesser (1) mit einem Einlaufzylinder (2), einem Einlaufkonus (3) oder einer Venturidüse, einem Halsteil (4) und einem Diffusor (5), die in Strömungsrichtung (6) nacheinander angeordnet sind, **dadurch gekennzeichnet, dass** vor dem Einlaufzylinder (2) ein Vorkonfusor (10) angeordnet ist.

2. Durchflussmesser nach Anspruch 1, **dadurch gekennzeichnet, dass** der Vorkonfusor (10) als Konus oder als Düse oder als Langradiusdüse ausgebildet ist.

3. Durchflussmesser nach Anspruch 1 oder 2, **dadurch gekennzeichnet, dass** der Durchmesser $D_{EZ}$ des Einlaufzylinders (2) etwa

$$D_{EZ} = \frac{D_E}{\sqrt{2}}$$

und der Durchmesser $D_{HT}$ des Halsteils (4) etwa

$$D_{HT} = \frac{D_E}{2}$$

betragen, wobei $D_E$ den Eingangsdurchmesser des Vorkonfusors (10) bezeichnet.

Fig.1

Fig.2

**Europäisches Patentamt**

# EUROPÄISCHER RECHERCHENBERICHT

Nummer der Anmeldung

EP 97 10 9356

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | A.A. KALINSKE: "THE TWIN THROAT VENTURI: A NEW FLUID-FLOW MEASURING DEVICE." JOURNAL OF BASIC ENGINEERING, Bd. 82, Nr. 3, September 1960, US, Seite 711 XP002043435 * Seite 711, linke Spalte, letzter Absatz - rechte Spalte, Absatz 2; Abbildung 3 * --- | 1,2 | G01F1/44 |
| X | DE 848 422 C (BOPP & REUTHER GMBH) * Seite 2, Zeile 37 - Zeile 55; Abbildung 1 * --- | 1,2 | |
| X | GB 2 263 172 A (PECO MACHINE SHOP AND INSPECTI ;PECO PRODUCTION TECHNOLOGY LIM (GB) 14.Juli 1993 * Seite 7, Absatz 1 - Seite 8, Absatz 2; Abbildungen 1,2 * --- | 1,2 | |
| X | GB 1 359 404 A (GEN SIGNAL CORP) 10.Juli 1974 * Seite 2, Zeile 3 - Zeile 101; Abbildungen 1-4 * --- | 1,2 | RECHERCHIERTE SACHGEBIETE (Int.Cl.6) G01F |
| X | US 3 374 673 A (TRAGESER JAMES H) 26.März 1968 * Spalte 4, Zeile 3 - Zeile 15; Abbildung 8 * --- | 1,2 | |
| A | DE 35 05 833 A (KRUPP KOPPERS GMBH) 21.August 1986 * Seite 5, letzter Absatz - Seite 8, Absatz 2; Abbildung * ----- | 1 | |

Der vorliegende Recherchenbericht wurde für alle Patentansprüche erstellt

| Recherchenort | Abschlußdatum der Recherche | Prüfer |
|---|---|---|
| DEN HAAG | 13.Oktober 1997 | Heinsius, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)